# EUROPÄISCHE PATENTSCHRIFT

(11) **EP 0 533 082 B1**
(45) Veröffentlichungstag und Bekanntmachung des Hinweises auf die Patenterteilung: **19.07.1995**
(21) Anmeldenummer: 92115668.3
(22) Anmeldetag: 14.09.1992
(51) Int. Cl.: C08F 8/48

(54) **Verfahren zur Herstellung von Polymethacrylimid-Polymeren**
Process for the manufacture of polymers of methacrylimide
Procédé de préparation de polymères de méthacrylimide

(30) Priorität: 14.09.1991 DE 4130612
(43) Veröffentlichungstag der Anmeldung: 24.03.1993
(73) Patentinhaber: Röhm GmbH, 64293 Darmstadt (DE)
(72) Erfinder: Brehm, Manfred, Dr., W-8750 Aschaffenburg (DE); Drögemüller, Hartwig, Dr., W-6100 Darmstadt (DE); Rau, Norbert, Dr., W-6105 Ober-Ramstadt (DE); Rhein, Thomas, Dr., W-6501 Stadecken-Elsheim (DE)

(56) Entgegenhaltungen:
- WO-A-92/04386
- DE-B- 1 121 335
- PATENT ABSTRACTS OF JAPAN vol. 14, no. 406 (C-754)(4349) 4. September 1990
- CHEMICAL ABSTRACTS, vol. 103, no. 2, Juli 1985, Columbus, Ohio, US; abstract no. 6894m, 'THERMOPLASTIC POLYMERS' Seite 14 ;Spalte 1 ;
- CHEMICAL ABSTRACTS, vol. 103, no. 24, Dezember 1985, Columbus, Ohio, US; abstract no. 196581c, 'CYCLIC IMIDE-CONTAINING POLYMERS' Seite 12 ;Spalte 2 ;
- CHEMICAL ABSTRACTS, vol. 110, no. 6, 20. M rz 1989, Columbus, Ohio, US; abstract no. 96048k, 'HEAT-RESISTANT METHACRYLIC POLYMER IMIDES WITH HIGH STRENGTH' Seite 17 ;

## Beschreibung

Die Erfindung betrifft ein Verfahren zur Herstellung von Polymethacrylimid-Polymeren. Darunter werden Polymere oder Copolymere mit wenigstens 2 Mol-% Einheiten der Struktur 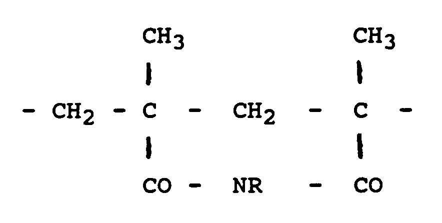
worin R ein Wasserstoffatom oder einen Alkylrest darstellt, verstanden. Der verbleibende Teil des Polymethacrylimid-Polymeren ist aus anderen Monomeren, insbesondere Methacrylmonomeren aufgebaut. Polymethacrylimid-Polymere zeichnen sich im Vergleich zu Polymethylmethacrylat, aus dem sie gewöhnlich hergestellt werden, durch eine wesentlich höhere Glasübergangstemperatur aus.

### Stand der Technik

Polymethacrylimid-Polymere können durch Erhitzen von Copolymeren aus Methacrylamid oder N-Alkyl-methacrylamiden und Alkylmethacrylaten unter Alkanol-Abspaltung hergestellt werden. Nach DE-B-1 113 308 wird ein Copolymerisat von Methacrylamid und Methylmethacrylat bei Temperaturen von 110 -220°C in Gegenwart von Wasser umgesetzt. Nach DE-B-1 121 335 kann man statt Wasser auch einen mindestens zweiwertigen Alkohol mit einem Siedepunkt über 110°C verwenden, wodurch
die Hydrolyse von Estergruppen verhindert wird. Die Cyclisierung in einem einwertigen Alkohol, wie Butanol, wird als nicht möglich bezeichnet.

In der DE-A-3 246 904 wird die Imidierung von Polymethacrylamid oder Mischpolymerisaten des Methacrylamids mit Methacrylestern in Gegenwart eines Lösungsmittels beansprucht; beschrieben wird indessen nur die Mitverwendung von Wasser.

Bei der Imidierung eines Mischpolymerisats aus gleichen Gewichtsteilen Methylmethacrylat und N-Methylacrylamid in Abwesenheit von Lösungsmitteln durch Erhitzen der Schmelze auf 230°C erhält man nach JP-A- 60 20 904 (Referat Chem.Abstracts 103, Nr.6894) ein Polymethacrylmethylimid-Polymer mit 63 % Glutarimideinheiten, die der oben wiedergegebenen Formel entsprechen. Bei einer vollständigen Umsetzung der N-Methylamid- mit den Estergruppen hätte nahezu reines Polymethacryl-N-methylimid entstehen müssen.

Wie aus EP-A-216 505 bekannt ist, führt die Umsetzung von Polymethylmethacrylat mit Methylamin im Extruder unter wasserfreien Bedingungen zu einem Polymethacrylmethylimid-Polymer mit etwa 5 bis 10 Gew.-% an Einheiten der Methacrylsäure oder ihres Anhydrids. Da diese Einheiten die Polymerisateigenschaften beeinträchtigen, werden sie gemäß EP-A 216 505 in einer nachgeschalteten Verfahrensstufe mit Alkylierungsmitteln, wie Orthoameisensäureestern, in Estergruppen umgewandelt.

### Aufgabe und Lösung

Ziel des Erfindung ist ein einfaches Verfahren zur Herstellung von Polymethacrylimid-Polymeren mit einem verminderten Gehalt an Amid- bzw. N-Alkylamidgruppen und an Carboxyl- und Carbonsäureanhydridgruppen.

Überraschenderweise wird dieses Ziel bei einem Verfahren zur Herstellung von Polymethacrylimid-Polymeren durch Erhitzen von Copolymeren aus 1 bis 60 Mol-% Methacrylamid oder/und N-Alkyl-methacrylamiden und 40 bis 99 Mol-% Alkylmethacrylaten oder/und Phenylmethacrylat in einem hydroxylgruppenhaltigen organischen Medium erreicht, wenn als solches ein aliphatischer Monoalkohol eingesetzt wird.

Es war nicht vorherzusehen, daß die Imidierung in Anwesenheit des aliphatischen Monoalkohols bis zur nahezu vollständigen Umsetzung der Amid- bzw. N-Alkylamidgruppen fortschreitet, während sie in Abwesenheit von Lösungsmittel bei einem niedrigen Imidierungsgrad stehenbleibt. Die Tatsache, daß überhaupt eine Imidierung des Polymerisats erreicht wird, muß überraschen, nachdem der Einsatz von einwertigen Alkoholen als hemmend für diese Reaktion beschrieben worden war.

Wie aus den Beispielen ersichtlich, erhält man bei der Imidierung von Copolymeren aus N-Methylmethacrylamid und Methylmethacrylat in Methanol bei 180-200°C Polymethacrylmethylimid-Polymere mit weniger als 15 Gew.-%, insbesondere mit 0 bis 2 Gew.-% N-Methyl-methacrylamid-Einheiten und bis zu 2 Gew.-% Methacrylsäure-Einheiten. Es hat den Anschein, als ob die gefundenen Methacrylsäure-Einheiten herstellungsbedingt schon in dem Ausgangspolymeren enthalten waren, so daß beim Verfahren der Erfindung keine neuen Carboxylgruppen gebildet wurden.

Die neuen Polymethacrylimid-Polymere eignen sich für ähnliche Anwendungsgebiete wie thermoplastische Polymethylmethacrylat-Kunststoffe, zeichnen sich jedoch vor diesen durch eine erhöhte Erweichungstemperatur aus. Sie können z.B. als thermoplastische Formmassen durch Spritzgießen oder Extrudieren zur Herstellung von Formkörpern verwendet werden. Sie lassen sich auch mit verschiedenen anderen thermoplastischen Kunststoffen, z.B. mit Polymethylmethacrylat, vermischen. Weiterhin können sie als Bindemittel für Pigmente oder Faserstoffe verwendet werden.

### Das Ausgangs-Copolymer

ist zu höchstens 60 Mol-% aus Methacrylamid oder aus einem oder gegebenenfalls mehreren verschiedenen N-Alkylmethacrylamiden aufgebaut. Bei einem höheren Anteil würde bei der Kondensation Ammoniak oder Alkylamin abgespalten, das zu unerwünschten Folgereaktionen Anlaß geben kann. Beispielsweise kann eine Alkylierung durch die Estergruppen bis zum Trialkylamin eintreten, wobei gleichzeitig Carboxylgruppen an dem Polymer entstehen.

Je niedriger der Anteil der Amid- bzw. N-Alkylamidgruppen in dem Ausgangs-Copolymer liegt, umso geringer ist der Anteil der entsprechenden Methacrylimid-Einheiten im Endprodukt und umso näher liegen die Glasübergangstemperatur und andere Polymerisateigenschaften an denen des Ausgangspolymers. Anteile des Methacrylamids oder/und N-Alkyl-methacrylamids von 10 bis 55, insbesondere 20 bis 45 Mol-% sind bevorzugt. Der N-Alkylrest enthält in der Regel 1 bis 20, vorzugsweise 1 bis 4 C-Atome. N-Methyl-methacrylamid ist das bevorzugte Methacrylamid-Monomer.

Unter den Alkylmethacrylaten ist Methylmethacrylat bevorzugt. Vorzugsweise enthält der Ester-Alkylrest nicht mehr als 4 C-Atome. Neben Methylresten kommen vor allem Ethyl-, n-Propyl, iso-Propyl, n-Butyl-, sec. Butyl- und Isobutylreste in Betracht. Auch Phenylmethacrylat ist geeignet. Das Ausgangs-Copolymer kann auch Gemische verschiedener Ester- und Amid-Einheiten enthalten.

Neben den N-Alkyl-methacrylamiden und den Alkylmethacrylaten können weitere Comonomer-Einheiten am Aufbau des Ausgangs-Copolymers beteiligt sein. Da sie die Imidierung beeinträchtigen können, liegt ihr Anteil vorzugsweise unter 20 Mol-%, bezogen auf die Molsumme der zugrundeliegenden Monomeren. Beispiele mitverwendbarer Comonomere sind Styrol und Acryl- und/oder Methacrylnitril.

Im Regelfall soll das herzustellende Polymethacrylimid-Polymer thermoplastisch verarbeitbar sein und ein Molekulargewicht von etwa 50 000 bis 250 000 Dalton haben. Für die Verwendung als Bindemittel kommen auch Molekulargewichte von etwa 10 000 bis 50 000 Dalton in Betracht.

Die Ausgangs-Copolymeren sind aus den Gemischen der entsprechenden Monomeren beispielsweise durch übliche Verfahren der radikalischen Polymerisation zugänglich. Zur Einstellung des erwünschten Molekulargewichts können Regler, beispielsweise Mercaptane, mitverwendet werden.

### Der aliphatische Monoalkohol

wird vorzugsweise so gewählt, daß sein Rest in den Einheiten des Alkylmethacrylats des Ausgangs-Copolymers, zumindest in einem Teil derselben, enthalten ist. Enthält das Ausgangs-Copolymer Einheiten des Methylmethacrylats, so ist Methanol der bevorzugte Alkohol. Wird ein Alkohol gewählt, dessen Rest in den Estergruppen des Ausgangs-Copolymeren nicht enthalten ist, so können sich infolge von Umesterungsreaktionen entsprechende Esterreste im Endprodukt bilden. Obwohl Alkanole mit 1 bis 4 Kohlenstoffatomen im Alkylrest bevorzugt sind, können auch höhere primäre Alkohole, wie Cyclohexanol oder Ethylenglykol-monobutylether verwendet werden. Im Interesse einer leichten Abtrennbarkeit sind Alkohole mit einem Siedepunkt unter 150°C bevorzugt. Man kann auch Gemische der Monoalkohole mit anderen organischen Lösemitteln, wie aliphatischen oder aromatischen Kohlenwasserstoffen, z.B. Toluol, einsetzen.

Offenbar übt der Alkohol während der Imidierung einen solvatisierenden Einfluß auf das Ausgangs-Copolymer aus, der die polymeranaloge Umsetzung der Amid- und Estergruppen begünstigt. Die Menge des Alkohols wird so groß gewählt, daß die Imidierung in der erforderlichen Vollständigkeit eintritt. In der Regel sind 10 bis 99 Gew.-%, bezogen auf das Gewicht des Reaktionsgemisches, ausreichend, bevorzugt sind etwa 20 bis 80 Gew.-%.

### Die Imidierung

tritt im Erweichungs- bzw. Schmelzzustand des Copolymeren bei Temperaturen über 120°C, vorzugsweise im Bereich von 170 bis 450°C ein. Diese Temperaturen sind in Druckreaktoren, beispielsweise bei einem autogenen Druck von 10 bis 70 bar erreichbar. Um bei geringeren Drücken arbeiten zu können, kann man auch hochsiedende Alkohole einsetzen. Bei der Umsetzung in einem Extruder kann der Betriebsdruck den autogenen Druck des Reaktionsgemisches gegebenenfalls weit überschreiten. Es ist vorteilhaft, aber nicht zwingend erforderlich, die Masse während der Umsetzung zu rühren oder zu kneten. Zweckmäßig setzt man einen Extruder als Reaktor ein. Der Alkohol kann nach Abschluß der Umsetzung dampfförmig aus dem heißen Reaktionsgemisch, vorzugsweise unter vermindertem Druck, abgezogen werden. Das kann z.B. im Entgasungsteil eines Extruders geschehen. Das Polymethacrylimid-Polymer kann dann im Schmelzzustand ausgetragen, gekühlt und zu einem als Formmasse verwendbaren Granulat zerkleinert werden.

### BEISPIELE

### A. Herstellung von N-Methyl-methacrylamid/Methylmethacrylat-Copolymeren

In einen Rührkessel wurden Methylmethacrylat (MMA) und N-Methyl-methacrylamid (MMam) zusammen mit tert.-Butylperoctoat (TBP) als Initiator in den in Tabelle 1 zu den Beispielen A1, A2 und A3 angegebenen Mengenverhältnissen sowie 0,3 Gew.-% (bez. Zulaufgewicht) Dodecylmercaptan als Regler kontinuierlich eingeleitet. Die Polymerisation fand bei einer Temperatur von 150°C statt. Bei einer Verweilzeit von 48 - 50 min wurde ein Umsatz von 40 - 50 % erzielt. Ein dem Zulauf entsprechender Materialstrom wurde dem Rührkessel kontinuierlich entnommen und in einen Entgasungsextruder eingeleitet, wo bei einem Druck von 20 mbar und einer Temperatur von 230°C die nicht umgesetzten Monomeren abgetrennt wurden. Die Zusammensetzung und die reduzierte Viskosität des erhaltenen Polymerisats sind in Tabelle 1 angegeben. Der an 100 Gew.-% fehlende Betrag der Polymerisatzusammensetzung entfällt auf Methacryl-N-methylimid-Einheiten. - Die reduzierte Viskosität wurde in Chloroform-Lösung bestimmt.

**Tabelle 1**

| Beisp. Nr. | Monomerzulauf | | Initiator Gew.-% TBP bez.Monom. | Umsatz % | Polymerisat | | Red. Visk. ml/g |
|---|---|---|---|---|---|---|---|
| | MMA : MMam | | | | MMA : MMam | | |
| | Gew.-teile | | | | Gew.-% | | |
| A1 | 55 | 45 | 0,029 | 50 | 72 | 27 | 25 |
| A2 | 33 | 67 | 0,017 | 44 | 47 | 50 | 24 |
| A3 | 30 | 70 | 0,045 | 50 | 43 | 54 | 22 |

### B. Herstellung eines Methacrylamid/Methylmethacrylat-Copolymers

Aus Methylmethacrylat (MMA), Methacrylamid (MAM), Azo-bis-isobutyronitril (AIBN) als Initiator sowie der gleichen Menge Dodecylmercaptan als Regler und Methanol (MeOH) in den in Tabelle 2 angegebenen Mengenverhältnissen wurden Monomerlösungen bereitet und 24 Stunden auf 70°C erhitzt, wobei Polymerisation eintrat. Die Polymerisate fielen während der Polymerisation aus. Die abfiltrierten Polymerisate wurden aus Dimethylsulfoxid/Methanol (B1) bzw. N-Methylpyrrolidon/Wasser (B2) umgefällt.

Bei der Herstellung von B3 wurde statt Methanol Dimethylsulfoxid als Polymerisationsmedium eingesetzt. Dodecylmercaptan wurde in der Hälfte der AIBN-Menge eingesetzt. Es entstand eine klare Polymerisatlösung, aus der sich das Polymerisat durch Eingießen in einen Überschuß von Wasser ausfällen ließ. Das Polymerisat wurde abgesaugt, mit Wasser gewaschen und bei 120°C getrocknet.

**Tabelle 2**

| Beisp. Nr. | Monomerzulauf | | Initiator G.-% AIBN bez.Monom. | MeOH Gew.-teile | Polymerisat | | Ausbeute in % bez. Monom. |
|---|---|---|---|---|---|---|---|
| | MMA : MAM | | | | MMA : MAM | | |
| | Gew.-teile | | | | Gew.-% | | |
| B1 | 54 | 46 | 0,54 | 773 | 63 | 37 | 55 |
| B2 | 64 | 36 | 0,51 | 400 | 68 | 32 | 83 |
| B3 | 50 | 50 | 0,50 | 400* | 63 | 37 | 75 |

| | | | | | | | |
|---|---|---|---|---|---|---|---|
| *DMSO | | | | | | | |

### C. Imidierung der Polymerisate A1 - A3

20 bzw. 70 g des zerkleinerten Ausgangs-Copolymer wurden zusammen mit 40 - 90 % (bez. a.d. Gewicht des Reaktionsgemisches) Methanol in einen 0,5-l-Rührautoklav gegeben und dieser nach dem Verschließen unter Rühren erhitzt. Die Höchsttemperatur wurde über die in Tabelle 2 angegebene Zeit aufrechtgehalten. Anschließend wurden, um die Entnahme des Polymerisats aus dem Reaktor zu erleichtern, 150 ml N-Methylpyrrolidon als Lösungsmittel mittels einer Druckpumpe eingepreßt. Nach dem Abkühlen wurde der Autoklav geöffnet, die Polymerlösung entnommen und das Polymerisat durch Eingießen in salzsaures Wasser ausgefällt, nachgewaschen, getrocknet, aus Tetrahydrofuran/Wasser nochmals umgefällt und bei 120°C getrocknet.

**Tabelle 3**

| Vers. Nr. | Ausg. Pol. | MeOH (%) | Temp. (°C) | Zeit (h) | Druck (bar) | Produkt, Gew.-% | | | | T_{g} (°C) |
|---|---|---|---|---|---|---|---|---|---|---|
| | | | | | | Imid | Ester | Amid | Säure | |
| 1 | 20 g A1 | 90 | 180 | 6 | 26 | 49 | 49 | 1,6 | 1,2 | 136 |
| 2 | 70 g A1 | 41 | 210 | 0,5 | 42 | 57 | 42 | 0,4 | 1,6 | 140 |
| 3 | 70 g A1 | 42 | 180 | 6 | 25 | 55 | 45 | 0 | 1,2 | 128 |
| 4 | 70 g A2 | 30 | 205 | 1 | 40 | 88 | 7,8 | 4,5 | - | 198 |
| 5 | 70 g A3 | 42 | 210 | 0,5 | 40 | 79 | 8,5 | 12 | 0,5 | 181 |

### D. Imidierung der Polymerisate B1 - B3

70 bzw. 40 Gew.-Tle. der Polymerisate B1 bis B3 und 50 bzw 80 Gew.-Tle. Methanol wurden in einem Autoklav unter Rühren erhitzt. Nach der Umsetzung wurde N-Methylpyrrolidon in den heißen Autoklav eingepumpt und das Polymerisat unter Rühren gelöst. Die Polymerisatlösung wurde in einen Überschuß von 1-2 %iger Salzsäure eingegossen, wobei das Polymerisat ausfällt. Es wurde abgesaugt, mit Wasser gewaschen und bei 120^{o}C getrocknet. Die Zusammensetzung der Polymerisate ergibt sich aus der NMR-Analyse und der Bestimmung der Säurezahl.

**Tabelle 4**

| Vers. Nr. | Ausg. Pol. | MeOH (g) | Temp. (°C) | Zeit (h) | Produkt, Gew.-% | | | | T_{g} (°C) |
|---|---|---|---|---|---|---|---|---|---|
| | | | | | Imid | Ester | Amid | Säure | |
| 7 | 70 g B1 | 50 | 180 | 6 | 69 | 29 | 1,0 | 1,0 | 187 |
| 8 | 70 g B2 | 50 | 180 | 6 | 57 | 42 | 0,0 | 1,3 | 169 |
| 9 | 40 g B3 | 80 | 210 | 0,5 | 75 | 24 | 0,7 | - | 179 |

## Patentansprüche

1. Verfahren zur Herstellung von Polymethacrylimid-Polymeren durch Erhitzen von Copolymeren aus 1 bis 60 Mol-% Methacrylamid oder/und N-Alkyl-methacrylamiden und 40 bis 99 Mol-% Alkylmethacrylaten oder/und Phenylmethacrylat in einem hydroxylgruppenhaltigen organischen Medium,
dadurch gekennzeichnet,
daß als hydroxylgruppenhaltiges organisches Medium ein aliphatischer Monoalkohol eingesetzt wird.

2. Verfahren nach Anspruch 1, dadurch gekennzeichnet, daß ein aliphatischer Monoalkohol eingesetzt wird, dessen Rest in Einheiten des Alkylmethacrylats des Copolymeren enthalten ist.

3. Verfahren nach Anspruch 1 oder 2, dadurch gekennzeichnet, daß 10 Gew.-% - 99 Gew.%, bezogen auf das Gewicht des Reaktionsgemisches, des aliphatischen Monoalkohols eingesetzt werden.

## Claims

1. A process for preparing polymethacrylimide polymers by heating copolymers consisting of 1 to 60 mol % of methacrylamide or/and N-alkyl-methacrylamides and 40 to 99 mol.% of alkylmethacrylates or/and phenylmethacrylates in an hydroxyl group-containing organic medium, characterised in that an aliphatic mono alcohol is used as hydroxyl group-containing organic medium.

2. A process according to claim 1, characterised in that an aliphatic monoalcohol is used, the radical of which is contained in units of the alkyl methacrylate of the copolymer.

3. A process according to claim 1 or 2, characterised in that 10 wt.% to 99 wt.%, based on the weight of the reaction mixture, of the aliphatic monoalcohol may be used.

## Revendications

1. Procédé de préparation de polymères de polyméthacrylimide par chauffage de copolymères de 1 à 60% en moles de méthacrylamide et/ou de N-alkylméthacrylamides et de 40 à 99% en moles de méthacrylates d'alkyle et/ou de méthacrylate de phényle dans un milieu organique contenant des groupements hydroxyle, caractérisé en ce que l'on utilise, comme milieu organique contenant des groupements hydroxyle, un monoalcool aliphatique.

2. Procédé selon la revendication 1, caractérisé en ce que l'on utilise un monoalcool aliphatique dont le reste est contenu dans las motifs du méthacrylate d'alkyle du copolymère.

3. Procédé selon la revendication 1 ou 2, caractérisé en ce que l'on utilise de 10 à 99% en poids, par rapport au poids du mélange réactionnel, du monoalcool aliphatique.
